# EUROPEAN PATENT APPLICATION

(11) **EP 4 418 696 A1**
(43) Date of publication of application: **21.08.2024**
(21) Application number: 22897975.3
(22) Date of filing: 28.11.2022
(51) Int. Cl.: H04W 4/06

(54) **SENSING SERVICE IMPLEMENTATION METHOD AND APPARATUS, AND NETWORK-SIDE DEVICE AND TERMINAL**

(30) Priority: 29.11.2021 CN 202111434374
(71) Applicant: Vivo Mobile Communication Co., Ltd., Dongguan, Guangdong 523863 (CN)
(72) Inventor: ZHANG, Hongping, Dongguan, Guangdong 523863 (CN); BAO, Wei, Dongguan, Guangdong 523863 (CN)
(74) Representative: Murgitroyd & Company
(86) International application number: PCT/CN2022/134826
(87) International publication number: WO 2023/093894

(57) **Abstract**

This application discloses a method and an apparatus for implementing a sensing service, a network side device, and a terminal, and belongs to the field of mobile communication. The method for implementing the sensing service in embodiments of this application includes: determining, by a first network device, a first condition, where the first condition indicates a condition that a target terminal used for performing sensing measurement needs to meet; sending, by the first network device to a terminal, a second message that carries the first condition; and receiving, by the first network device, a third message from the terminal, and determining the target terminal based on the third message. The terminal is a terminal that meets the first condition, and the third message includes indication information indicating whether the terminal supports or expects to perform the sensing measurement.

## Description

### CROSS-REFERENCE TO RELATED APPLICATION

This application claims priority to Chinese Patent Application No. 202111434374.0 filed on November. 29, 2021, which is incorporated herein by reference in its entirety.

### TECHNICAL FIELD

This application belongs to the field of mobile communication technology, and specifically, relates to a method and an apparatus for implementing a sensing service, a network side device, and a terminal.

### BACKGROUND

Wireless sensing may generally mean retrieving information from a received radio signal. For wireless sensing related to sensing a target location, a dynamical parameter such as a reflection delay, an angle of arrival (AoA), an angle of departure (AoD) or a Doppler parameter of a target signal may be estimated in a common signal processing method. Sensing a target physical feature may be implemented by measuring an intrinsic mode signal of a device, an object, or an activity. With the development of communication networks and terminals, integrated sensing and communication (Integrated Sensing and Communication, ISAC) has a potential of integrating the wireless sensing into a large-scale mobile network, to implement a perceptive mobile network (Perceptive Mobile Network, PMN). The PMN is expected to become a ubiquitous wireless sensor network, and provides a stable and high-quality mobile communication service. In addition to a communication ability, a mobile communication system further has a sensing ability in the future. The sensing ability specifically means that one or more of devices that have the sensing ability can detect, track, identify, and image a target object, an event, an environment, or the like by sending and receiving radio signals.

However, for some sensing service scenarios, for example, weather sensing, air pollution monitoring, and human/vehicle traffic volume monitoring in an area, because a specific location of a terminal (also referred to as user equipment (User Equipment, UE)) is not known, when the UE is directly selected by using a network, inappropriate UE may be selected. This affects a success rate of the sensing service and reliability of a sensing measurement result.

### SUMMARY

Embodiments of this application provide a method and an apparatus for implementing a sensing service, a network side device, and a terminal, to solve a problem that when UE is directly selected by using a network, inappropriate UE may be selected and a success rate of the sensing service and reliability of a sensing measurement result are affected.

According to a first aspect, a method for implementing a sensing service is provided, applied to a first network device, and the method includes the following steps:

The first network device determines a first condition, where the first condition indicates a condition that a target terminal used for performing sensing measurement needs to meet.

The first network device sends, to a terminal, a second message that carries the first condition.

The first network device receives a third message from the terminal, and determines the target terminal based on the third message. The terminal is a terminal that meets the first condition, and the third message includes indication information indicating whether the terminal supports or expects to perform the sensing measurement.

According to a second aspect, an apparatus for implementing a sensing service is provided, including:
a condition determining module, configured to determine a first condition, where the first condition indicates a condition that a target terminal used for performing sensing measurement needs to meet;
a condition sending module, configured to: send, to a terminal, a second message that carries the first condition; and
a sensing execution module, configured to: receive a third message from the terminal, and determine the target terminal based on the third message, where the terminal is a terminal that meets the first condition, and the third message includes indication information indicating whether the terminal supports or expects to perform the sensing measurement.

According to a third aspect, a method for implementing a sensing service is provided, applied to a second network device, and the method includes the following steps:

The second network device determines a first condition based on an obtained first message. The first message is used to request to perform a sensing measurement. The first message is a non-terminal associated message. The first condition indicates a condition that a target terminal used for performing the sensing measurement needs to meet.

The second network device sends, to a terminal via a first network device corresponding to the sensing measurement, a second message that carries the first condition.

The second network device receives a third message from the terminal via the first network device, and determines the target terminal based on the third message. The terminal is a terminal that meets the first condition, and the third message includes indication information indicating whether the terminal supports or expects to perform the sensing measurement.

According to a fourth message, an apparatus for implementing a sensing service is provided, including:
a condition determining module, configured to determine a first condition based on an obtained first message, where the first message is used to request to perform sensing measurement, the first message is a non-terminal associated message, and the first condition indicates a condition that a target terminal used for performing sensing measurement needs to meet;
a condition sending module, configured to: send, to a terminal via a first network device corresponding to the sensing measurement, a second message that carries the first condition; and
a sensing execution module, configured to: receive a third message from the terminal via the first network device, and determine the target terminal based on the third message, where the terminal is a terminal that meets the first condition, and the third message includes indication information indicating whether the terminal supports or expects to perform the sensing measurement.

According to a fifth aspect, a method for implementing a sensing service is provided, applied to a terminal, and the method includes:

The terminal receives a second message that carries a first condition and that is sent by a network device. The first condition indicates a condition that a target terminal used for performing sensing measurement needs to meet.

The terminal determines, based on the first condition, to send or not to send a third message to the network device. The third message includes indication information indicating whether the terminal supports or expects to perform the sensing measurement.

According to a sixth aspect, an apparatus for implementing a sensing service is provided, including:
a condition receiving module, configured to receive a second message that carries a first condition and that is sent by a network device, where the first condition indicates a condition that a target terminal used for performing sensing measurement needs to meet; and
a sensing execution module, configured to: determine, based on the first condition, to send or not to send a third message to the network device, where the third message includes indication information indicating whether the terminal supports or expects to perform the sensing measurement.

According to a seventh aspect, a terminal is provided, where the terminal includes a processor and a memory. The memory stores a program or instructions executable on the processor. When the program and the instructions are executed by the processor, steps of the method according to the fifth aspect are implemented.

According to an eighth aspect, a network side device is provided, where the network side device includes a processor and a memory. The memory stores a program or instructions executable on the processor. When the program and the instructions are executed by the processor, steps of the method according to the first aspect are implemented, or steps of the method according to the third aspect are implemented.

According to a ninth aspect, a terminal is provided, including a processor and a communication interface. The processor is configured to: determine, based on a first condition, to send or not to send a third message, where the third message includes indication information indicating whether the terminal supports or expects to perform a sensing measurement. The communication interface is configured to receive a second message that carries the first condition and that is sent by a network device, where the first condition indicates a condition that a target terminal used for performing the sensing measurement needs to meet.

According to a tenth aspect, a system for implementing a sensing service is provided, including a terminal and a network side device. The terminal is configured to perform steps of the method for implementing a sensing service according to the fifth aspect. The network side device is configured to perform steps of the method according to the first aspect.

According to an eleventh aspect, a readable storage medium is provided, where the readable storage medium stores a program or instructions. When the program or the instructions are executed by the processor, steps of the method according to the first aspect are implemented, or steps of the method according to the third aspect are implemented, or steps of the method according to the fifth aspect are implemented

According to a twelfth aspect, a chip is provided, where the chip includes a processor and a communication interface. The communication interface is coupled to the processor. The processor is configured to run a program or instructions, to implement steps of the method according to the first aspect, or to implement steps of the method according to the third aspect, or to implement steps of the method according to the fifth aspect.

According to a thirteenth aspect, a computer program/a program product is provided, where the computer program/the program product is stored in a storage medium. The computer program/the program product is executed by at least one processor, to implement steps of the method for implementing a sensing service according to the first aspect, or to implement steps of the method for implementing a sensing service according to the third aspect, or to implement steps of the method for implementing a sensing service according to the fifth aspect.

In embodiments of this application, a first condition is determined via a first network device, where the first condition indicates a condition that a target terminal used for performing sensing measurement needs to meet. A second message that carries the first condition is sent to a terminal. The first network device receives a third message from the terminal, and determines the target terminal based on the third message. The terminal is a terminal that meets the first condition, and the third message includes indication information indicating whether the terminal supports or expects to perform the sensing measurement. In embodiments of this application, the terminal determines, based on the first condition, to support or expect to perform the sensing measurement. Then, a target terminal is selected, to perform the sensing measurement, from terminals that support or expect to perform the sensing measurement. This improves execution efficiency of a sensing service, and ensures reliability of a sensing measurement result.

### BRIEF DESCRIPTION OF THE DRAWINGS

FIG. 1 is a schematic diagram of a structure of a wireless communication system to which an embodiment of this application is applicable;
FIG. 2 is a flowchart of a method for implementing a sensing service according to an embodiment of this application;
FIG. 3 is a flowchart of another method for implementing a sensing service according to an embodiment of this application;
FIG. 4 is a flowchart of another method for implementing a sensing service according to an embodiment of this application;
FIG. 5 is a schematic diagram of a structure of an apparatus for implementing a sensing service according to an embodiment of this application;
FIG. 6 is a flowchart of another method for implementing a sensing service according to an embodiment of this application;
FIG. 7 is a flowchart of another method for implementing a sensing service according to an embodiment of this application;
FIG. 8 is a schematic diagram of a structure of another apparatus for implementing a sensing service according to an embodiment of this application;
FIG. 9 is a flowchart of another method for implementing a sensing service according to an embodiment of this application;
FIG. 10 is a schematic diagram of a structure of another apparatus for implementing a sensing service according to an embodiment of this application;
FIG. 11 is a schematic diagram of a structure of a communication device according to an embodiment of this application;
FIG. 12 is a schematic diagram of a structure of a network side device for implementing an embodiment of this application;
FIG. 13 is a schematic diagram of a structure of another network side device for implementing an embodiment of this application; and
FIG. 14 is a schematic diagram of a structure of a terminal for implementing an embodiment of this application.

### DETAILED DESCRIPTION

The following clearly describes the technical solutions in embodiments of this application with reference to the accompanying drawings in embodiments of this application. It is clear that, the described embodiments are some of the embodiments of this application rather than all of the embodiments. All other embodiments obtained by a person of ordinary skill in the art based on embodiments of this application shall fall within the protection scope of this application.

The terms "first", "second", and the like in the specification and claims of this application are used to distinguish between similar objects, but are not used to describe a specific sequence or order. It may be understood that the terms used in such a way are interchangeable in proper circumstances, so that the embodiments of this application can be implemented in sequences other than the sequence illustrated or described herein. Objects distinguished by using "first" and "second" are generally of one class, and a quantity of the objects are not limited. For example, there may be one or more first objects. In addition, "and/or" in the specification and the claims represents at least one of connected objects, and the character "/" generally represents an "or" relationship between associated objects.

It is worth noting that, the technologies described in embodiments of this application are not limited to a long term evolution (Long Term Evolution, LTE)/LTE-advanced (LTE-Advanced, LTE-A) system, and may be further applied to other wireless communication systems, for example, a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access. OFDMA) system, a single-carrier frequency division multiple access (Single-carrier Frequency Division Multiple Access, SC-FDMA) system, and other systems. The terms "system" and "network" in embodiments of this application may usually be used interchangeably. The technology described in embodiments of this application can be applied to the systems and radio technologies mentioned above, and can also be applied to other systems and radio technologies. The following describes a new radio (New Radio, NR) system for example, and NR terms are used in most of the following descriptions. However, these technologies may alternatively be applied to an application in a system other than the NR system, for example, a 6th generation (6th Generation, 6G) system.

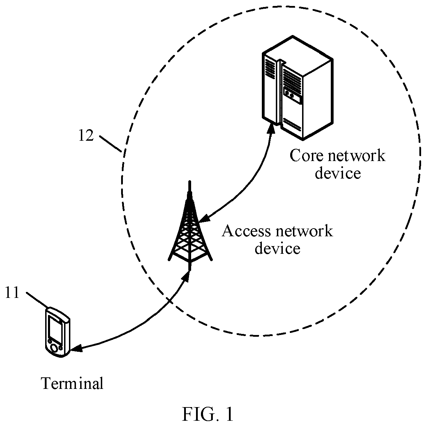

FIG. 1 is a block diagram of a wireless communication system to which an embodiment of this application is applicable. The wireless communication system includes a terminal 11 and a network side device 12. The terminal 11 may be a mobile phone, a tablet computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR) device /a virtual reality (virtual reality, VR) device, a robot, a wearable device (Wearable Device), a vehicle-mounted device (VUE), a pedestrian terminal (PUE), a smart home (a home appliance having a wireless communication function, for example, a refrigerator, a television, a washing machine, or furniture), a game console, a personal computer (personal computer, PC), a terminal side device such as a teller machines or a self-service machine. The wearable device includes a smart watch, a smart bracelet, a smart headphone, smart glasses, smart jewelry (a smart ring, a smart necklace, and a smart anklet), a smart wristband, smart clothes, and the like. It should be noted that, a specific type of the terminal 11 is not limited in embodiments of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (transmission reception Point, TRP), or other proper terms in the field. The base station is not limited to a specific technical term, provided that the same technical effect is achieved. It should be noted that, in embodiments of this application, only the base station in the NR system is introduced as an example, and a specific type of the base station is not limited. The core network device may include but not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in embodiments of this application, only the core network in the NR system is introduced as an example, and a specific type of the core network is not limited.

With reference to the accompanying drawings, the following provides detailed descriptions of a method and an apparatus for implementing a sensing service and an electronic device provided in embodiments of this application by using some embodiments and application scenarios.

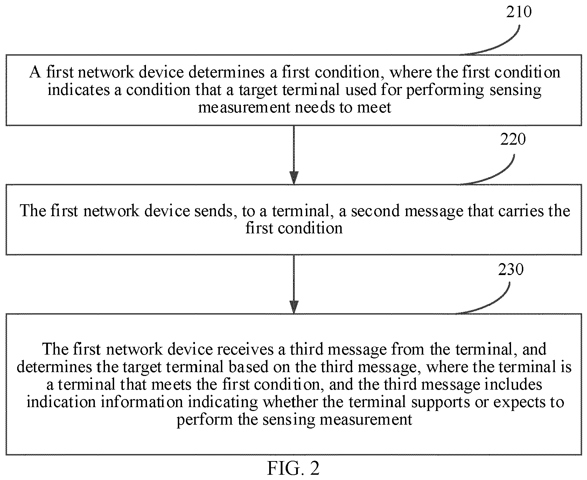

As shown in FIG. 2, an embodiment of this application provides a method for implementing a sensing service, and an execution entity of the method may be a first network device, where the first network device may be a radio access network device, for example, a base station. In other words, the method may be executed by software or hardware mounted on the first network device. The method may include the following steps:

Step 210: The first network device determines a first condition, where the first condition indicates a condition that a target terminal used for performing sensing measurement needs to meet.

The first network device may determine the first condition in a variety of manners. A part or all of the first condition may originate from other network devices, for example, a core network device or a sensing server. Alternatively, the first network device determines, based on a received message of another network device, the first condition that the target terminal used for performing the sensing measurement needs to meet.

Further, the first condition may be determined based on factors such as a type and a requirement of the sensing measurement, and the first condition includes at least one of the following:

The terminal supports a specified sensing capability: For example, the terminal supports weather sensing or air quality monitoring; supports a measured value, to be specific, supports obtaining a value of a measurement parameter; or supports sending a sensing signal. The first network device or the another network device may determine, based on the requirement of the sensing measurement, sensing capabilities that the target terminal needs to support, to determine the condition.

The terminal is in a specified connection status: The specified connection status may be any one or a plurality of radio resource control (Radio Resource Control, RRC) connected states, including an RRC connected state, an RRC inactive state, an RRC idle state, or the like. Because terminals in the RRC connected state and the RRC inactive state can send sensing data more quickly than a terminal in the RRC idle state, a delay of the sensing service is reduced. Therefore, for a delay-sensitive sensing service, the terminal may be required to be in the RRC connected state and/or the RRC inactive state.

The terminal is in a specified moving state: The specified moving state may be a label of a terminal location or a moving speed. For example, the terminal may be required to be a terminal having a fixed location. Especially for some sensing services, the terminal having the fixed location is beneficial to improving accuracy of a sensing result.

The terminal is a sensing measurement unit: The sensing measurement unit is a terminal device dedicated to performing some sensing services. This is beneficial to improving reliability and the accuracy of the sensing result.

The terminal is in a sensing area: The sensing area may be a specified geographic location point and an area less than or equal to a specified radius from the geographic location point. When the performed sensing service is a sensing service for an area, a terminal that performs the sensing service needs to be limited in a range of the area.

A signal of a serving cell of the terminal meets a specified condition: That the signal of the serving cell of the terminal meets the specified condition may include that reference signal received power (Reference Signal Received Power, RSRP), reference signal received quality (Reference Signal Received Quality, RSRQ), and signal strength and the like of the serving cell is higher than a specified threshold. This is to ensure efficiency of information transmission when the terminal interacts with the first network device, and is beneficial to improving the reliability of the sensing service.

Step 220: The first network device sends, to the terminal, a second message that carries the first condition.

The first network device may send the second message to all or some cells of the first network device. For example, the first network device may send, based on a coverage range of the sensing area to a terminal in a cell whose coverage overlaps the sensing area, the second message that carries the first condition.

The first network device may send the second message to all terminals in the RRC connected state, or may send the second message only to the terminal in the RRC inactive state and/or the terminal in the RRC idle state.

In an implementation, step 220 may include: In a case that it is determined that a quantity of terminals that meet the first condition and that are in terminals in the radio resource control RRC connected state is less than a target quantity, the first network device sends the second message that includes the first condition to the terminal in the RRC inactive state and/or the terminal in the RRC idle state. The target quantity is a quantity of terminals needed to perform the sensing measurement or a minimum quantity of needed terminals.

After determining the first condition, the first network device may first determine a quantity of terminals that meet the first condition and that are in the RRC connected state in all or some cells of the first network device. If the quantity of terminals in the RRC connected state is greater than or equal to the target quantity, the first network device may directly use the terminals in the RRC connected state as target terminals to perform the sensing measurement or reporting; or may select a target terminal from the terminals in the RRC connected state to perform the sensing measurement or reporting; or may send, to the terminals in the RRC connected state, the second message that carries the first condition. If the quantity of the terminals in the RRC connected state is less than the target quantity, the first network device broadcasts the second message to all or some cells. The second message may be sent to all terminals in the RRC connected state, or may be sent to the terminal in the RRC inactive state and/or the terminal in the RRC idle state.

Further, a form of the second message sent by the first network device may be set based on an actual need, or may be set based on an RRC connected state of a terminal. In an implementation, the form of the second message may include at least one of the following:
a system message, for example, an RRC message; and
a paging message (paging).

The terminal in the RRC inactive state and the terminal in the RRC idle state may receive, by monitoring the system message and the paging message, the second message that carries the first condition. For the terminal in the RRC connected state, the first network device may use one of the following two manners to send the second message:
Manner 1: The first condition may be carried in a dedicated RRC message and sent to the terminal.
Manner 2: The paging message may be sent to the terminal by using a dedicated radio network temporary identifier (Radio Network Temporary Identifier, RNTI). The UE in the RRC connected state receives the second message by monitoring the dedicated RNTI.

Step 230: The first network device receives a third message from the terminal, and determines the target terminal based on the third message. The terminal is a terminal that meets the first condition, and the third message includes indication information indicating whether the terminal supports or expects to perform the sensing measurement.

After the terminal receives the second message that carries the first condition and that is sent by the first network device, the terminal determines, based on the first condition, to send or not to send the third message to the first network device. The third message includes the indication information indicating whether the terminal supports or expects to perform the sensing measurement.

In an implementation, the terminal first determines whether the terminal meets the first condition. If the terminal meets the first condition, the terminal then determines to support or expect to perform the sensing measurement, and then determines to send or not to send the third message to the first network device.

In an implementation, when determining to support or expect to perform the sensing measurement, the terminal sends the third message to the first network device. The third message includes the indication information indicating whether the terminal supports the sensing measurement or expects to perform the sensing measurement d. When the terminal determines not to support or expect to perform the sensing measurement, the terminal may choose not to send the third message to the first network device, or send, to the first network device, the third message that includes indication information indicating that the sensing measurement is not supported or is not expected to be performed. However, for brevity, in the following embodiments, that the terminal does not send the third message is only used as an example for description.

A manner in which the terminal determines to support or expect to perform the sensing measurement may be set based on the actual need. Embodiments of this application provide only some specific embodiments.

In an implementation, when meeting the first condition, the terminal sends, to the first network device, the third message that includes the indication information indicating that the sensing measurement is supported or is expected to be performed. To be specific, when determining that the terminal meets the first condition, the terminal determines to support or expect to perform the sensing measurement, and then sends the third message to the first network device. When determining that the terminal does not meet the first condition, the terminal determines not to support or expect to perform the sensing measurement, and then does not send the third message.

In another implementation, the terminal determines, based on the second message in a case that the terminal meets the first condition, to support or expect to perform the sensing measurement. To be specific, when determining that the terminal meets the first condition, the terminal further needs to determine to support or expect to perform the sensing measurement. Specifically, it may be determined based on a status of the terminal. For example, it may be determined based on factors such as a power status and a network environment of the terminal. For example, if the power level of the terminal is low, even if the terminal meets the first condition, the terminal may still determine not to support or expect to perform the sensing measurement.

In an implementation, in addition to the first condition, the second message further includes sensing task information of the sensing measurement, where the sensing task information includes at least one of the following:
a sensing type, for example, sensing weather, and sensing traffic flow;
sensing duration, where the sensing duration may be estimated sensing duration; and an estimated amount of reported data.

When the terminal determines to support or expect to perform the sensing measurement, the terminal sends, to the first network device, the third message that includes the indication information indicating that the sensing measurement is supported or is expected to be performed.

In another implementation, because there are a lot of terminals that meet the first condition, or there are a lot of terminals that support or expect to perform the sensing measurement, too many terminals that perform the sensing measurement may cause a waste of network resources, and may even cause network congestion. Therefore, the first network device may predetermine a first proportion used for selection, to select the terminals. For example, the first proportion is set to 20%. The first proportion may be a selection proportion, for example, terminals of the first proportion are selected as the target terminals from the terminals that meet the first condition, or from the terminals that support or expect to perform the sensing measurement. The first proportion may alternatively be a filtering proportion, for example, terminals of the first proportion are filtered out from the terminals that meet the first condition, or from the terminals that support or expect to perform the sensing measurement, and are not used as the target terminal. For brevity, that the first proportion is the selection proportion is used as an example for description in the following embodiments.

In an implementation, the first network device may send information about the first proportion to the terminal. The second message may further include the information about the first proportion. The information about the first proportion indicates a proportion of terminals that meet the first condition and that send the third message or a proportion of terminals that meet the first condition and that do not send the third message or a probability at which a terminal that meets the first condition sends or does not send the third message.

After the terminal receives the second message that carries the information about the first proportion, the terminal may determine, based on the first proportion, whether the terminal meets the first condition. Alternatively, when determining that the first condition is satisfied, the terminal may determine, based on the first proportion, to support or expect to perform the sensing measurement. Alternatively, when determining that the terminal supports or expects to perform the sensing measurement, the terminal may determine, based on the first proportion, to send the third message.

A manner of performing determining based on the first proportion may be set based on the actual need. For example, if the first proportion is 20%, the terminal may randomly generate a value within 1 to 100. When the value is less than or equal to 20, a result is determined to be successful. When the value is greater than 20, the result is determined to be failed.

Further, a form of the third message sent by the terminal may be set based on the actual need. In an implementation, the third message may be an RRC message, for example, a terminal auxiliary information message.

Further, if the terminal is also in the RRC inactive state or in the RRC idle state, before the terminal sends the third message, the terminal further needs to initiate a radio resource control connection resume or establishment process.

A reason for initiating the radio resource control connection resume or establishment process is to respond to the sensing measurement or to send the third message.

After receiving third messages replied by all terminals, the first network device may determine the target terminal based on the third messages. In an implementation, the first network device may determine a terminal from which the third message is received as the target terminal, or may select the target terminal from terminals from which third messages are received when a quantity of terminals from which the third messages are received is excessively large.

In an implementation, to assist the first network device in further determining the target terminal, the terminal may further carry at least one of the following in the third message:
a geographical location of the terminal;
a signal measurement result of a serving cell corresponding to the terminal;
a power level of the terminal; and
a sensing ability supported by the terminal.

When determining the target terminal based on the third message, the first network device may perform determining based on additional information carried in the third message. For example, the first network device may select a terminal whose geographical location better matches the sensing area, may select a terminal whose signal of a serving cell is better, or may select a terminal having a stronger sensing ability.

When determining the target terminal used for performing the sensing service, the first network device and the target terminal perform a sensing measurement process. The sensing measurement process may be as follows: The first network device sends a sensing signal, and the terminal performs the sensing measurement, and sends a sensing measurement result to the first network device. Alternatively, the terminal sends a sensing signal, and the first network device performs the sensing measurement to obtain a sensing measurement result.

Based on the foregoing technical solutions of the embodiments, the first network device determines the first condition in embodiments of this application. The first condition indicates the condition that the target terminal used for performing the sensing measurement needs to meet. The second message that carries the first condition is sent to the terminal. The first network device receives the third message from the terminal, and determines the target terminal based on the third message. The terminal is a terminal that meets the first condition, and the third message includes the indication information indicating whether the terminal supports or expects to perform the sensing measurement. In embodiments of this application, the terminal determines, based on the first condition, to support or expect to perform the sensing measurement. Then, the target terminal is selected, to perform the sensing measurement, from terminals that support or expect to perform the sensing measurement. This improves the execution efficiency of the sensing service, and ensures the reliability of the sensing measurement result.

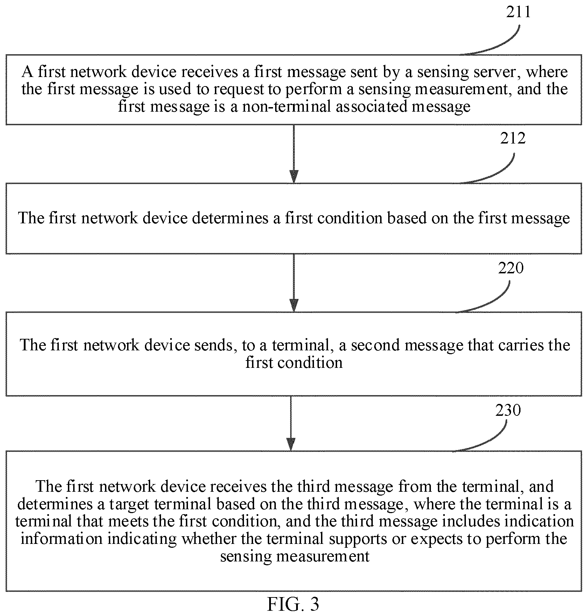

Based on the foregoing embodiments, as shown in FIG. 3, step 210 may be performed in a variety of manners. An embodiment of this application only provides one of the implementations, and step 210 includes:

Step 211: The first network device receives a first message sent by a sensing server, where the first message is used to request to perform the sensing measurement, and the first message is a non-terminal associated message.

The sensing server may receive a sensing measurement request from a third party server or a second network device. The sensing measurement request is not associated with a terminal. To be specific, the third party server or the second network device does not select the target terminal for performing the sensing measurement. For example, the sensing measurement request may be used to request to sense a weather condition, or monitor air pollution, a flowrate of people, and traffic congestion in an area. The second network device may be a core network device.

In an implementation, the sensing measurement request may carry at least one of the following information:
a type of the sensing measurement, for example, sensing weather, and sensing air;
a sensing area;
sensing quality of service (Quality of Service, QoS), and the like.

The sensing server determines the first network device based on the received sensing measurement request. For example, the sensing server determines one or a plurality of first network devices based on the sensing area; sends the first message to the first network device, for example, sends, to the first network device, a sensing measurement request message used to request the first network device to perform the sensing measurement.

In an implementation, the first message includes at least one of the following:
a method of the sensing measurement;
a measured value of the sensing measurement;
a sensing area of the sensing measurement, where the sensing area may be an area in which performs the sensing measurement, or an area in which the target terminal is located;
a target quantity of terminals needed for the sensing measurement;
reporting times of the sensing measurement, or a data volume;
a report type of the sensing measurement, for example, the measured value, or a sensing result; and
all or a part of the first condition.

It should be understood that, the first message is a non-UE associated (non-UE associated) message, or a global (global) message.

The first message may be sent in a variety of forms. In an implementation, the first message may be a message based on a protocol stack between the first network device and the sensing server, for example, an SP2 message.

In another implementation, the first message may be sent to the first network device via the second network device. The first message is carried in a message based on an NG application protocol (NG Application Protocol, NGAP) between the core network device and the access network device. The NGAP message is a non-UE associated message. To be specific, the NGAP message does not carry a session identifier that is of a terminal and that is assigned by the first network device: RAN UE NGAP ID.

Step 212: The first network device determines the first condition based on the first message.

Step 212 may be used to implement the method embodiment shown in step 210 in FIG. 2, and achieve the same technical effect. Repeated parts are not repeated herein again.

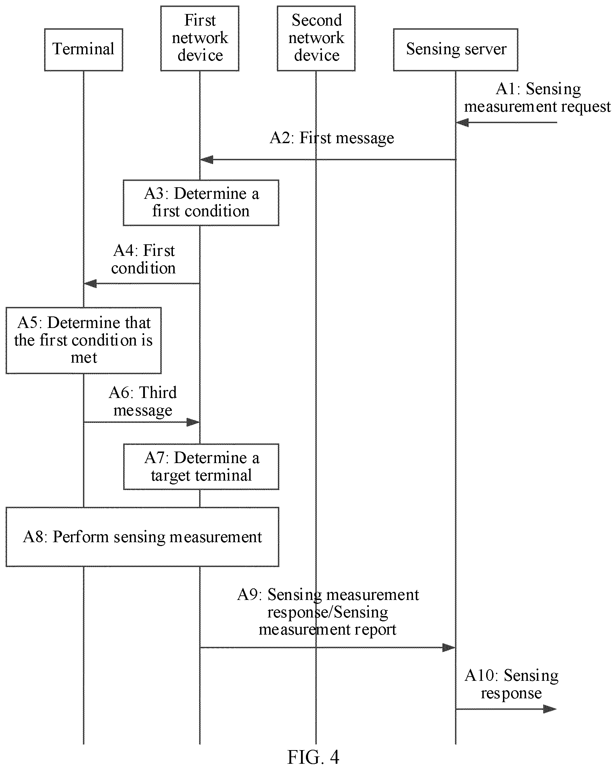

FIG. 4 is an example of a method for implementing a sensing service according to an embodiment of this application, and the steps are as follows:

Step A1: A sensing server receives a sensing measurement request form a third party server or a core network device.

Step A2: The sensing server determines a first network device based on the sensing measurement request, and sends a first message to the first network device.

Step A3: The first network device determines a first condition based on the first message.

Step A4: The first network device sends, to a terminal, a second message that carries the first condition.

Step A5: The terminal determines whether the terminal meets the first condition, and whether the terminal supports or expects to perform a sensing measurement.

Step A6: When determining to support or expect to perform the sensing measurement, the terminal sends a third message to the first network device.

Step A7: The first network device determines a target terminal based on a received third message.

Step A8: The first network device and the target terminal perform the sensing measurement to obtain a sensing measurement result.

Step A9: The first network device reports the sensing measurement result to the sensing server.

Step A10: After receiving the sensing measurement result, the sensing server may calculate a sensing result based on the sensing measurement result. The sensing server may determine to trigger to send a sensing response to the third party server or the core network device. For example, in a case that the sensing result is not ideal, the sensing server may continue to receive more sensing measurement results, and in a case that the sensing result meets a requirement, the sensing server triggers to send the sensing response to the third party server or the core network device, where the sensing response carries the sensing result.

Based on the foregoing technical solutions of the embodiments, the first network device receives the first message sent by the sensing server in embodiments of this application. The first message is used to request to perform the sensing measurement, and the first message is a non-terminal associated message. The first network device determines the first condition based on the first message. The sensing server sends a non-terminal associated first message in embodiments of this application. Instead of determining the target terminal by the network device, the terminal determines to support or expect to perform the sensing measurement, and selects the target terminal, to perform the sensing measurement, from terminals that support or expect to perform the sensing measurement. This improves execution efficiency of the sensing service, and ensures reliability of the sensing measurement result.

Embodiments of this application provide a sensing measurement method, and an execution entity may be an apparatus for implementing the sensing service. In embodiments of this application, the method for implementing the sensing service by using the apparatus for implementing the sensing service is used as an example to explain the apparatus for implementing the sensing service provided by embodiments of this application.

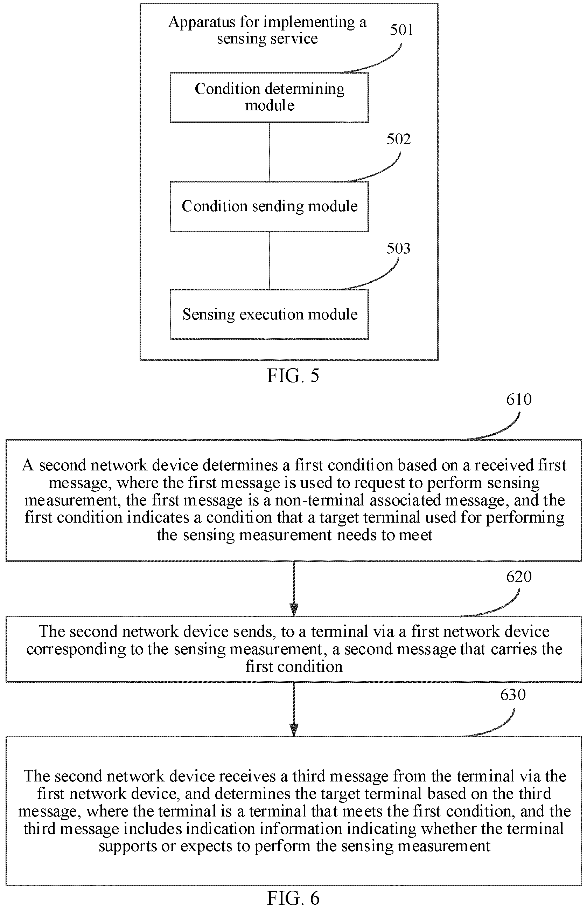

As shown in FIG. 5, an apparatus for implementing a sensing service includes a condition determining module 501, a condition sending module 502, and a sensing execution module 503.

The condition determining module is configured to determine a first condition, where the first condition indicates a condition that a target terminal used for performing the sensing measurement needs to meet.

The condition sending module is configured to: send, to a terminal, a second message that carries the first condition.

The sensing execution module is configured to: receive a third message from the terminal, and determine the target terminal based on the third message, where the terminal is a terminal that meets the first condition, and the third message includes indication information indicating whether the terminal supports or expects to perform the sensing measurement.

Further, the first condition includes at least one of the following:
the terminal supports a specified sensing ability;
the terminal is in a specified connection status;
the terminal is in a specified moving state;
the terminal is a sensing measurement unit;
the terminal is in the sensing area; and
a signal of a serving cell of the terminal meets a specified condition.

Further, the second message further includes information about a first proportion, where the information about the first proportion indicates a proportion of the terminals that meet the first condition and that send the third message or a proportion of terminals that meet the first condition and that do not send the third message.

Further, the condition sending module 502 is configured to: In a case that it is determined that "in all terminal devices" in a radio resource control RRC connected state, a quantity of terminals that meet the first condition is less than a target quantity, the first network device sends the second message that includes the first condition to a terminal in an RRC inactive state and/or a terminal in an RRC idle state.

Further, a form of the second message includes at least one of the following:
a system message; and
a paging message.

Further, the second message further includes sensing task information of the sensing measurement, where the sensing task information includes at least one of the following:
a sensing type;
sensing duration; and
an estimated amount of reported data.

Further, the third message further includes at least one of the following:
a geographical location of the terminal;
a signal measurement result of a serving cell corresponding to the terminal;
a power level of the terminal; and
a sensing ability supported by the terminal.

Further, the apparatus for implementing the sensing service is a radio access network device.

Based on the foregoing technical solutions of the embodiments, the condition determining module determines the first condition in embodiments of this application, where the first condition indicates a condition that a target terminal used for performing the sensing measurement needs to meet. The condition sending module sends, to the terminal, the second message that carries the first condition. The sensing execution module receives the third message from the terminal, and determines the target terminal based on the third message, where the terminal is a terminal that meets the first condition, and the third message includes indication information indicating whether the terminal supports or expects to perform the sensing measurement. In embodiments of this application, the terminal determines, based on the first condition, to support or expect to perform the sensing measurement. Then, the target terminal is selected, to perform the sensing measurement, from terminals that support or expect to perform the sensing measurement. This improves execution efficiency of the sensing service, and ensures reliability of a sensing measurement result.

Based on the foregoing embodiments, further, the condition determining module is configured to:
the first network device receives the first message sent by the sensing server. The first message is used to request to perform the sensing measurement, and the first message is a non-terminal associated message.

The first network device determines the first condition based on the first message.

Further, the first message includes at least one of the following:
a method of the sensing measurement;
a measured value of the sensing measurement;
a sensing area of the sensing measurement;
a target quantity of terminals needed for the sensing measurement;
reporting times of the sensing measurement;
a report type of the sensing measurement; and
all or a part of the first condition.

Based on the foregoing technical solutions of the embodiments, the first network device receives the first message sent by the sensing server in embodiments of this application. The first message is used to request to perform the sensing measurement, and the first message is the non-terminal associated message. The first condition is determined based on the first message. The sensing server sends a non-terminal associated first message in embodiments of this application. Instead of determining the target terminal by the network device, the terminal determines to support or expect to perform the sensing measurement, and selects the target terminal, to perform the sensing measurement, from terminals that support or expect to perform the sensing measurement. This improves the execution efficiency of the sensing service, and ensures the reliability of the sensing measurement result.

The apparatus for implementing the sensing service in embodiments of this application may be an electronic device, such as an electronic device having an operating system, or a component in the electronic device, such as an integrated circuit or a chip. The electronic device may be the terminal, or may be a device other than the terminal. For example, the terminal may include but not limited to a type of the terminal 11 listed above. Other devices may be a server, a network attached storage (Network Attached Storage, NAS). Embodiments of this application are not specifically limited.

The apparatus for implementing the sensing service provided by embodiments of this application can realize each process realized by the method embodiments of FIG. 2 to FIG. 4 and achieve the same technical effect. To avoid repetition, this is not described herein again.

As shown in FIG. 6, embodiments of this application provide another method for implementing a sensing service, and an execution entity may be a second network device. The second network device may be a core network device, for example, an access and mobility management function AMF. In other words, the method may be executed by software or hardware mounted on the second network device. The method may include the following steps.

Step 610: The second network device determines a first condition based on an obtained first message. The first message is used to request to perform a sensing measurement. The first message is a non-terminal associated message. The first condition indicates a condition that a target terminal used for performing the sensing measurement needs to meet.

It should be understood that, the first message is a sensing measurement request sent by a third party server or other network devices.

Further, the first message includes at least one of the following:
a method of the sensing measurement or a type of the sensing measurement;
a measured value of the sensing measurement;
a sensing area of the sensing measurement;
a target quantity of terminals needed for the sensing measurement;
reporting times of the sensing measurement;
a report type of the sensing measurement; and
all or a part of the first condition.

The second network device may determine the first condition in a variety of manners. A part or all of the first condition may originate from other network devices, for example, a core network device or a sensing server. Alternatively, the second network device determines, based on the received first message, the first condition that the target terminal used for performing the sensing measurement needs to meet.

Further, the first condition includes at least one of the following:
the terminal supports a specified sensing ability;
the terminal is in a specified connection status;
the terminal is in a specified moving state;
the terminal is a sensing measurement unit;
the terminal is in the sensing area; and
a signal of a serving cell of the terminal meets a specified condition.

Step 620: The second network device sends, to the terminal via a first network device corresponding to the sensing measurement, a second message that carries the first condition.

Further, step 620 may be implemented in a variety of manners. In an implementation,

The second network device determines, based on the first message, first network device corresponding to the sensing measurement. For example, the sensing server determines one or a plurality of first network devices based on the sensing area; sends the first message to the first network device, for example, sends, to the first network device, a sensing measurement request message used to request the first network device to perform the sensing measurement.

The second message that carries the first condition is sent to the first network device, and is used to find a terminal that performs the sensing measurement in the first network device.

In an implementation, the second message may be a paging message that carries the first condition or newly introduced other information. The second message indicates the first network device to send the second message to the terminal in a paging or broadcasting manner

Further, the second message further includes a cell list corresponding to the sensing measurement, where a cell in the cell list may be a cell whose coverage overlaps the sensing area. The cell list is sent to the first network device, and indicates the first network device to send the second message in a range of the cell list. This saves a network resource.

After the terminal receives the second message that carries the first condition and that is sent by the second network device, the terminal determines, based on the first condition, to send or not to send the third message to the second network device. The third message includes the indication information indicating whether the terminal supports or expects to perform the sensing measurement.

In an implementation, the terminal first determines whether the terminal meets the first condition. If the terminal meets the first condition, the terminal then determines to support or expect to perform the sensing measurement, and then the terminal determines to send or not to send the third message to the second network device.

In an implementation, when determining to support or expect to perform the sensing measurement, the terminal sends the third message to the second network device. The third message includes indication information indicating whether the terminal supports the sensing measurement or expects to perform the sensing measurement. When the terminal determines not to support or expect to perform the sensing measurement, the terminal may choose not to send the third message to the first network device.

A manner in which the terminal determines to support or expect to perform the sensing measurement may be set based on the actual need. Embodiments of this application provide only some specific embodiments.

In an implementation, when meeting the first condition, the terminal sends, to the first network device, the third message that includes the indication information indicating that the sensing measurement is supported or is expected to be performed. To be specific, when determining that the terminal meets the first condition, the terminal determines to support or expect to perform the sensing measurement, and then sends the third message to the first network device. When determining that the terminal does not meet the first condition, the terminal determines not to support or expect to perform the sensing measurement, and then does not send the third message.

In another implementation, the terminal determines, based on the second message in a case that the terminal meets the first condition, to support or expect to perform the sensing measurement. To be specific, when determining that the terminal meets the first condition, the terminal further needs to determine to support or expect to perform the sensing measurement. Specifically, it may be determined based on a status of the terminal. For example, it may be determined based on factors such as a power status and a network environment of the terminal. For example, if the power level of the terminal is low, even if the terminal meets the first condition, the terminal may still determine not to support or expect to perform the sensing measurement.

Further, the second message further includes sensing task information of the sensing measurement, where the sensing task information includes at least one of the following:
a sensing type;
sensing duration; and
an estimated amount of reported data.

The terminal may determine to support or expect to perform the sensing measurement based on the sensing task information.

When the terminal determines to support or expect to perform the sensing measurement, the terminal sends, to the first network device, the third message that includes the indication information indicating that the sensing measurement is supported or is expected to be performed.

In another implementation, because there are a lot of terminals that meet the first condition, or there are a lot of terminals that support or expect to perform the sensing measurement, the second network device may predetermine a first proportion for selection, to select the terminals. The second message further includes information about the first proportion, where the information about the first proportion indicates a proportion of the terminals that meet the first condition and that send the third message or a proportion of terminals that meet the first condition and that do not send the third message.

In an implementation, the first proportion may be used to select a terminal of the first proportion as the target terminal from terminals that support or expect to perform the sensing measurement after the second network device receives the third message from the terminal.

In another implementation, the second network device may send the information about the first proportion to the terminal. After the terminal receives the second message that carries the information about the first proportion, the terminal may determine, based on the first proportion, whether the terminal meets the first condition. Alternatively, when determining the first condition, the terminal may determine, based on the first proportion, to support or expect to perform the sensing measurement. Alternatively, when determining that the terminal supports or expects to perform the sensing measurement, the terminal may determine, based on the first proportion, to send the third message.

Further, a form of the third message sent by the terminal may be set based on the actual need. In an implementation, the third message may be a non access stratum (Non Access Stratum, NAS) message.

Further, if the terminal is also in an RRC inactive state or in an RRC idle state, before the terminal sends the third message, the terminal further needs to initiate a radio resource control connection resume or establishment process.

A reason for initiating the radio resource control connection resume or establishment process is to respond to the sensing measurement or to send the third message.

Step 630: The second network device receives the third message from the terminal via the first network device, and determines the target terminal based on the third message, where the terminal is a terminal that meets the first condition, and the third message includes indication information indicating whether the terminal supports or expects to perform the sensing measurement.

After receiving the third message that is replied by each terminal, the second network device may determine the target terminal based on the third message. In an implementation, the first network device may determine a terminal from which the third message is received as the target terminal, or may select the target terminal from terminals from which the third messages are received when a quantity of terminals from which the third messages are received is excessive.

Further, to assist the second network device to further determine the target terminal, the third message may further include at least one of the following:
a geographical location of the terminal;
a signal measurement result of a serving cell corresponding to the terminal;
a power level of the terminal; and
a sensing ability supported by the terminal.

When determining the target terminal based on the third message, the second network device may perform determining based on additional information carried in the third message.

When determining the target terminal used for performing the sensing service, the second network device sends the sensing measurement request to the sensing server for each target terminal to request to perform a sensing measurement process performed between the sensing server and the target terminal. The sensing measurement process may be as follows: The first network device sends a sensing signal, the terminal performs the sensing measurement, and then sends the sensing measurement result to the first network device, or may be that the terminal sends the sensing signal, the first network device performs the sensing measurement to obtain the sensing measurement result.

A difference between the technical solutions of embodiments of this application and the technical solutions shown in FIG. 2 to FIG. 4 is that in the technical solutions shown in FIG. 2 to FIG. 4, the first network device determines the first condition and sends the first condition to the terminal, and determines, based on the third message, the target terminal to perform the sensing measurement that is reported by the terminal and that supports or expects to perform the sensing measurement. In embodiments of this application, based on the same technical concept, the second network device determines the first condition and sends the first condition to the terminal. When determining the first condition and sending the first condition to the terminal, the second network device determines, based on the third message, the target terminal to perform the sensing measurement that is reported by the terminal and that supports or expects to perform the sensing measurement. The technical solutions in embodiments of this application may achieve a same technical effect as the technical solutions shown in FIG. 2 to FIG. 4, and repeated parts are not described herein again.

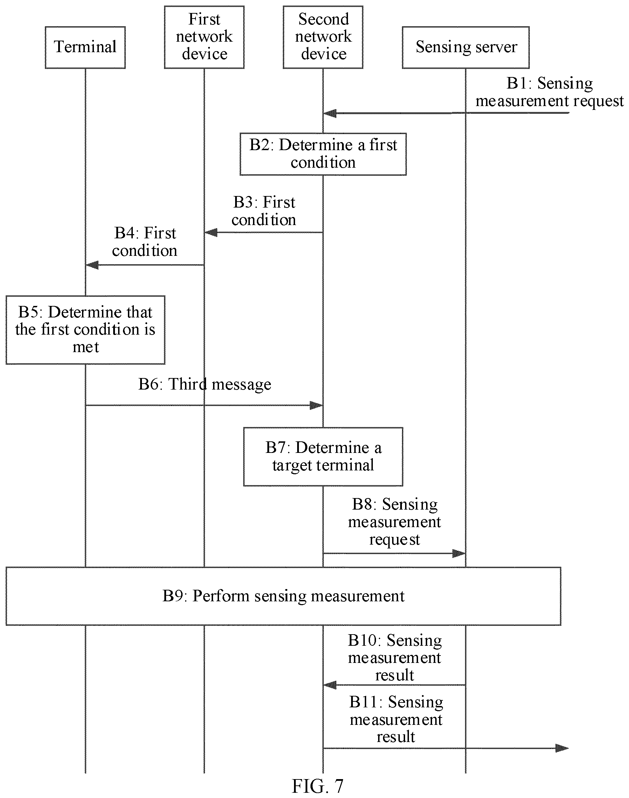

FIG. 7 is a specific example according to an embodiment of this application.

Step B 1: A second network device receives a first message from a third party server or a core network device, where the first message is a non-terminal associated message.

Step B2: The second network device determines a first condition based on the first message.

Step B3: The second network device determines a first network device based on the first message, and send, to the first network device, a second message that carries the first condition.

Step B4: The first network device sends, to a terminal, the second message that carries the first condition.

Step B5: The terminal determines whether the terminal meets the first condition, and whether the terminal supports or expects to perform a sensing measurement.

Step B6: When determining to support or expect to perform the sensing measurement, the terminal sends a third message to the second network device.

Step B7: The second network device determines a target terminal based on a received third message.

Step B8: The second network device and the sensing server sends the sensing measurement request to request a sensing measurement process performed by the sensing server and the target terminal.

Step B9: The sensing server and the target terminal perform the sensing measurement to obtain a sensing measurement result.

Step B 10: After receiving the sensing measurement result, the sensing server sends the sensing measurement result to the second network device.

Step B 11: The second network device sends the sensing measurement result to the third party server or other network devices.

Based on the foregoing technical solutions of the embodiments, the second network device determines the first condition based on the obtained first message in embodiments of this application. The first message is used to request to perform a sensing measurement. The first message is a non-terminal associated message. The first condition indicates a condition that a target terminal used for performing the sensing measurement needs to meet. The second network device sends, to the terminal via a first network device corresponding to the sensing measurement, the second message that carries the first condition. The second network device receives the third message from the terminal via the first network device, and determines the target terminal based on the third message. The terminal is a terminal that meets the first condition, and the third message includes indication information indicating whether the terminal supports or expects to perform the sensing measurement. In embodiments of this application, the terminal determines, based on the first condition, to support or expect to perform the sensing measurement. Then, the target terminal is selected, to perform the sensing measurement, from terminals that support or expect to perform the sensing measurement. This improves execution efficiency of the sensing service, and ensures reliability of the sensing measurement result.

Embodiments of this application provide a sensing measurement method, and an execution entity may be an apparatus for implementing a sensing service. In embodiments of this application, the method for implementing the sensing service by using the apparatus for implementing the sensing service is used as an example to explain the apparatus for implementing the sensing service provided by embodiments of this application.

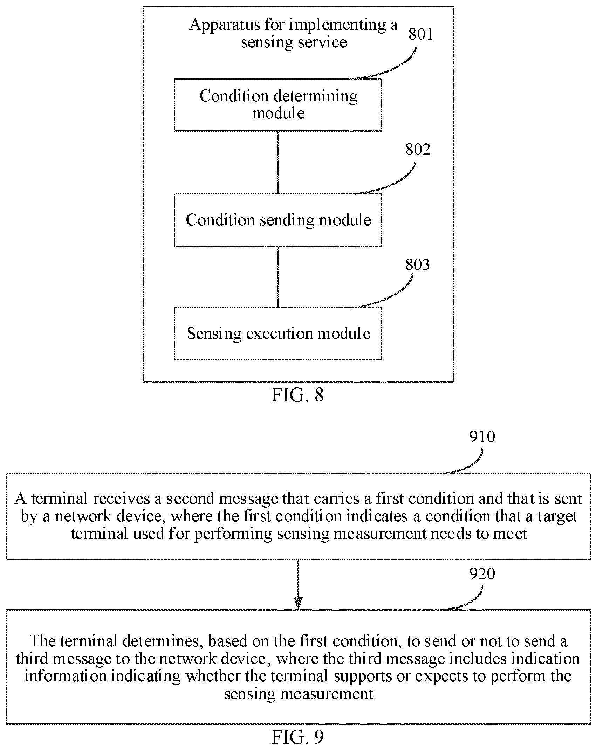

As shown in FIG. 8, an apparatus for implementing a sensing service includes a condition determining module 801, a condition sending module 802, and a sensing execution module 803.

The condition determining module 801 is configured to determine a first condition based on an obtained first message. The first message is used to request to perform a sensing measurement. The first message is a non-terminal associated message. The first condition indicates a condition that a target terminal used for performing the sensing measurement needs to meet. The condition sending module 802 is configured to: send, to a terminal via a first network device corresponding to the sensing measurement, a second message that carries the first condition. The sensing execution module 803 is configured to: receive a third message from the terminal via the first network device, and determine the target terminal based on the third message. The terminal is a terminal that meets the first condition, and the third message includes indication information indicating whether the terminal supports or expects to perform the sensing measurement.

Further, the first message includes at least one of the following:
a method of the sensing measurement;
a measured value of the sensing measurement;
a sensing area of the sensing measurement;
a target quantity of terminals needed for the sensing measurement;
reporting times of the sensing measurement;
a report type of the sensing measurement; and
all or a part of the first condition.

Further, the first condition includes at least one of the following:
the terminal supports a specified sensing ability;
the terminal is in a specified connection status;
the terminal is in a specified moving state;
the terminal is a sensing measurement unit;
the terminal is in the sensing area; and
a signal of a serving cell of the terminal meets a specified condition.

Further, the condition sending module 802 is configured to:
determine, based on the first message, the first network device corresponding to the sensing measurement; and
send, to the first network device, the second message that carries the first condition.

Further, the second message further includes a cell list corresponding to the sensing measurement.

Further, the second message further includes information about the first proportion, where the information about the first proportion indicates a proportion of the terminals that meet the first condition and that send the third message or a proportion of terminals that meet the first condition and that do not send the third message.

Further, the second message further includes sensing task information of the sensing measurement, where the sensing task information includes at least one of the following:
a sensing type;
sensing duration; and
an estimated amount of reported data.

Further, the third message further includes at least one of the following:
a geographical location of the terminal;
a signal measurement result of a serving cell corresponding to the terminal;
a power level of the terminal; and
a sensing ability supported by the terminal.

Further, the apparatus for implementing the sensing service is a core network device.

Based on the foregoing technical solutions of the embodiments, the first network device receives the first message sent by the sensing server in embodiments of this application. The first message is used to request to perform the sensing measurement, and the first message is the non-terminal associated message. The first condition is determined based on the first message. The sensing server sends a non-terminal associated first message in embodiments of this application. Instead of determining the target terminal by the network device, the terminal determines to support or expect to perform the sensing measurement, and selects the target terminal, to perform the sensing measurement, from terminals that support or expect to perform the sensing measurement. This improves execution efficiency of the sensing service, and ensures reliability of the sensing measurement result.

The apparatus for implementing the sensing service in embodiments of this application may be an electronic device, such as an electronic device having an operating system, or a component in the electronic device, such as an integrated circuit or a chip. The electronic device may be the terminal, or may be a device other than the terminal. For example, the terminal may include but not limited to a type of the terminal 11 listed above. Other devices may be a server, a network attached storage (Network Attached Storage, NAS). Embodiments of this application are not specifically limited.

The apparatus for implementing the sensing service provided by embodiments of this application can realize each process realized by the method embodiment of FIG. 6 and achieve the same technical effect. To avoid repetition, this is not described herein again.

Based on the foregoing technical solutions of the embodiments, in embodiments of this application, the first condition is determined based on the obtained first message. The first message is used to request to perform a sensing measurement. The first message is a non-terminal associated message. The first condition indicates a condition that a target terminal used for performing the sensing measurement needs to meet. The second message that carries the first condition is sent to the terminal via the first network device corresponding to the sensing measurement. The first network device receives the third message from the terminal, and determines the target terminal based on the third message. The terminal is a terminal that meets the first condition, and the third message includes indication information indicating whether the terminal supports or expects to perform the sensing measurement. In embodiments of this application, a terminal determines, based on the first condition, to support or expect to perform a sensing measurement. Then, a target terminal is selected, to perform the sensing measurement, from terminals that support or expect to perform the sensing measurement. This improves execution efficiency of a sensing service, and ensures reliability of a sensing measurement result.

The apparatus for implementing the sensing service in embodiments of this application may be an electronic device, such as an electronic device having an operating system, or a component in the electronic device, such as an integrated circuit or a chip. The electronic device may be the terminal, or may be a device other than the terminal. For example, the terminal may include but not limited to a type of the terminal 11 listed above. Other devices may be a server, a network attached storage (Network Attached Storage, NAS). Embodiments of this application are not specifically limited.

The apparatus for implementing the sensing service provided by embodiments of this application can realize each process realized by the method embodiment of FIG. 7 and achieve the same technical effect. To avoid repetition, this is not described herein again.

As shown in FIG. 9, embodiments of this application provide a method for implementing a sensing service, and an execution entity of the method may be a terminal. In other words, the method may be executed by software or hardware mounted on the terminal. The method may include the following steps.

Step 910: The terminal receives a second message that carries a first condition and that is sent by a network device. The first condition indicates a condition that a target terminal used for performing the sensing measurement needs to meet.

Step 920: The terminal determines, based on the first condition, to send or not to send a third message to the network device, where the third message includes indication information indicating whether the terminal supports or expects to perform the sensing measurement.

Further, step 920 includes:

Send, to the network device in a case that the terminal meets the first condition, the third message that includes indication information indicating that the sensing measurement is supported or is expected to be performed.

Further, step 920 includes:
Determine, based on the second message in a case that the terminal meets the first condition, whether the terminal supports or expects to perform the sensing measurement; and
sending, to the network device in a case that the terminal supports or expects to perform the sensing measurement, the third message that includes the indication information indicating that the sensing measurement is supported or is expected to be performed.

Further, the first condition includes at least one of the following:
the terminal supports a specified sensing ability;
the terminal is in a specified connection status;
the terminal is in a specified moving state;
the terminal is a sensing measurement unit;
the terminal is in the sensing area; and
a signal of a serving cell of the terminal meets a specified condition.

Further, a form of the second message includes at least one of the following:
a system message; and
a paging message.

Further, the second message further includes information about the first proportion, where the information about the first proportion indicates a proportion of the terminals that meet the first condition and that send the third message or a proportion of terminals that meet the first condition and that do not send the third message. Correspondingly, step 920 includes:
Determine, based on the information about the first proportion in a case that the terminal meets the first condition, to send or not to send the third message to the network device.

Further, the second message further includes sensing task information of the sensing measurement. Correspondingly, step 920 includes:
Determine, based on the sensing task information in a case that the terminal meets the first condition, to send or not to send third message is sent or not sent to the network device, where
the sensing task information includes at least one of the following:
   a sensing type;
   sensing duration; and
   an estimated amount of reported data.

Further, the third message further includes at least one of the following:
a geographical location of the terminal;
a signal measurement result of a serving cell corresponding to the terminal;
a power level of the terminal; and
a sensing ability supported by the terminal.

Further, when the terminal is in a radio resource control inactive state or in a radio resource control idle state, and before the third message is sent to the network device, the method further includes:

The terminal initiates a radio resource control connection resume or establishment process.

Further, a reason for initiating the radio resource control connection resume or establishment process is to respond to the sensing measurement or to send the third message.

Further, the network device is a radio access network device and/or a core network device.

Step 910 and step 920 may implement method embodiments shown in in FIG. 2 to FIG. 4, and FIG. 6, and achieve the same technical effect. Repeated parts is not repeated herein again.

Based on the foregoing technical solutions of the embodiments, the terminal receives the second message that carries the first condition and that is sent by the network device in embodiments of this application. The first condition indicates the condition that the target terminal used for performing the sensing measurement needs to meet. The terminal determines, based on the first condition, to send or not to send the third message to the network device. The third message includes the indication information indicating whether the terminal supports or expects to perform the sensing measurement. In embodiments of this application, the terminal determines, based on the first condition, to support or expect to perform the sensing measurement. Then, the target terminal is selected, to perform the sensing measurement, from terminals that support or expect to perform the sensing measurement. This improves execution efficiency of the sensing service, and ensures reliability of a sensing measurement result.

Embodiments of this application provide a sensing measurement method, and an execution entity may be an apparatus for implementing a sensing service. In embodiments of this application, the method for implementing the sensing service by using the apparatus for implementing the sensing service is used as an example to explain the apparatus for implementing the sensing service provided by embodiments of this application.

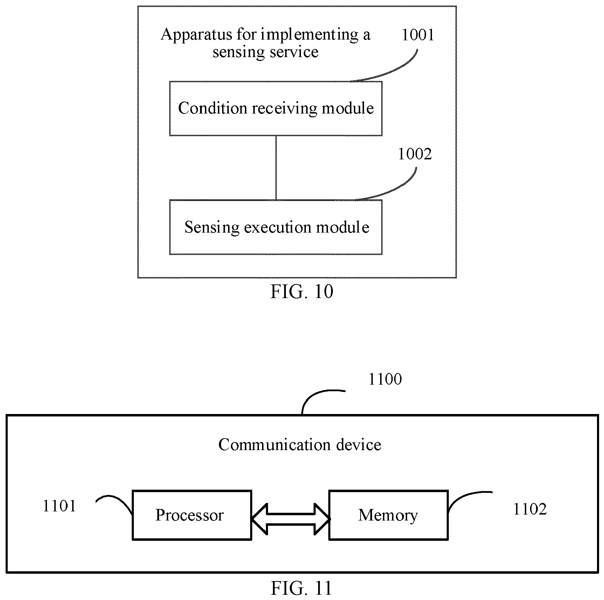

As shown in FIG. 10, an apparatus for implementing a sensing service includes a condition receiving module 1001, and a sensing execution module 1002.

The condition receiving module 1001 is configured to receive a second message that carries a first condition and that is sent by a network device, where the first condition indicates a condition that a target terminal used for performing the sensing measurement needs to meet. The sensing execution module 1002 is configured to: determine, based on the first condition, to send or not to send a third message to the network device, where the third message includes indication information indicating whether the terminal supports the sensing measurement or expects to perform the sensing measurement.

Further, the sensing execution module 1002 is configured to:
send, to the network device in a case that the terminal meets the first condition, the third message that includes indication information indicating that the sensing measurement is supported or is expected to be performed.

Further, the sensing execution module 1002 is configured to:
determine, based on the second message in a case that the terminal meets the first condition, whether the terminal supports or expects to perform the sensing measurement; and
send, to the network device in a case that the terminal supports or expects to perform the sensing measurement, the third message that includes the indication information indicating that the sensing measurement is supported or expected to be performed.

Further, the first condition includes at least one of the following:
the terminal supports a specified sensing ability;
the terminal is in a specified connection status;
the terminal is in a specified moving state;
the terminal is a sensing measurement unit;
the terminal is in the sensing area; and
a signal of a serving cell of the terminal meets a specified condition.

Further, a form of the second message includes at least one of the following:
a system message; and
a paging message.

Further, the second message further includes information about a first proportion, where the information about the first proportion indicates a proportion of the terminals that meet the first condition and that send the third message or a proportion of terminals that meet the first condition and that do not send the third message. Correspondingly, the sensing execution module 1002 is configured to:
determine, based on the information about the first proportion in a case that the terminal meets the first condition, to send or not to send the third message to the network device.

Further, the second message further includes sensing task information of the sensing measurement. Correspondingly, the sensing execution module 1002 is configured to:
determine, based on the sensing task information in a case that the terminal meets the first condition, to send or not to send the third message to the network device, where
the sensing task information includes at least one of the following:
   a sensing type;
   sensing duration; and
   an estimated amount of reported data.

Further, the third message further includes at least one of the following:
a geographical location of the terminal;
a signal measurement result of a serving cell corresponding to the terminal;
a power level of the terminal; and
a sensing ability supported by the terminal.

Further, when the terminal is in a radio resource control inactive state or in a radio resource control idle state, the sensing execution module 1002 is further configured to:
initiate a radio resource control connection resume or establishment process.

Further, a reason for initiating the radio resource control connection resume or establishment process is to respond to the sensing measurement or to send the third message.

Further, the network device is a radio access network device and/or a core network device.

Based on the foregoing technical solutions of the embodiments, the terminal receives the second message that carries the first condition and that is sent by the network device in embodiments of this application. The first condition indicates the condition that the target terminal used for performing the sensing measurement needs to meet. The terminal determines, based on the first condition, to send or not to send the third message to the network device. The third message includes the indication information indicating whether the terminal supports the sensing measurement or expects to perform the sensing measurement. In embodiments of this application, the terminal determines, based on the first condition, to support or expect to perform the sensing measurement. Then, the target terminal is selected, to perform the sensing measurement, from terminals that support or expect to perform the sensing measurement. This improves execution efficiency of the sensing service, and ensures reliability of a sensing measurement result.

The apparatus for implementing the sensing service in embodiments of this application may be an electronic device, such as an electronic device having an operating system, or a component in the electronic device, such as an integrated circuit or a chip. The electronic device may be the terminal, or may be a device other than the terminal. For example, the terminal may include but not limited to a type of the terminal 11 listed above. Other devices may be a server, a network attached storage (Network Attached Storage, NAS). Embodiments of this application are not specifically limited.

The apparatus for implementing the sensing service provided by embodiments of this application can realize each process realized by the method embodiment of FIG. 9 and achieve the same technical effect. To avoid repetition, this is not described herein again.

As shown in FIG. 11, embodiments of this application further provide a communication 1100, including a processor 1101 and a memory 1102. The memory 1102 stores a program or instructions executable on the processor 1101. For example, when the communication 1100 is a terminal, each step of method embodiment for implementing the sensing service is implemented when the program or the instructions is/are executed by the processor 1101, and a same technical effect can be achieved. When the communication device 1100 is a network side device, each step of method embodiment for implementing the sensing service is implemented when the program or the instructions is/are executed by the processor 1101, and the same technical effect can be achieved. To avoid repetition, this is not described herein again.

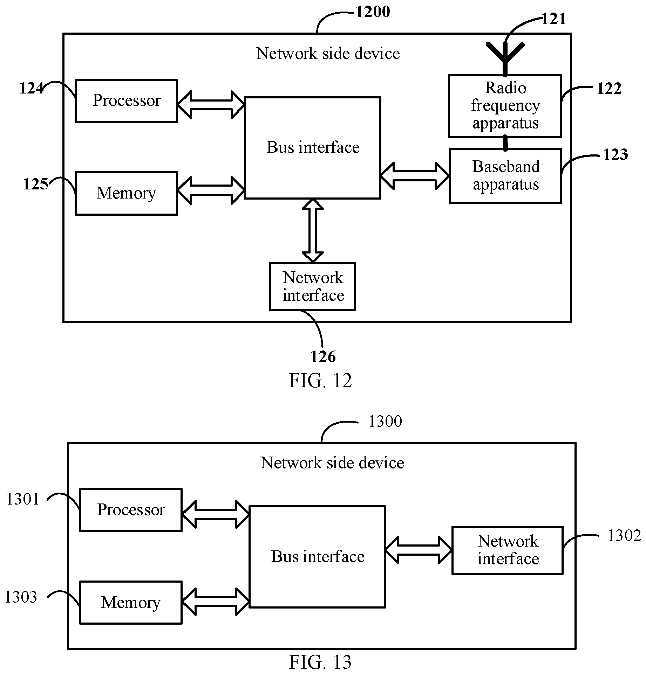

Specifically, embodiments of this application provide a network side device. As shown in FIG. 12, a network side device 1200 include an antenna 121, a radio frequency apparatus 122, a baseband apparatus 123, a processor 124 and a memory 125. The antenna 121 is connected with the radio frequency apparatus 122. In an uplink direction, the radio frequency apparatus 122 receives information by using the antenna 121 and sends the received information to the baseband apparatus 123 for processing. In a downlink direction, the baseband apparatus 123 processes information to be sent and sends the information to the radio frequency apparatus 122. The radio frequency apparatus 122 processes the received information and then sends the information by using the antenna 121.

The method performed by the network side device in the foregoing embodiments may be implemented in the baseband apparatus 123. The baseband apparatus 123 includes a baseband processor.

The baseband apparatus 123, for example, may include at least one baseband board. The baseband board disposes a plurality of chips. As shown in FIG. 12, one chip is the baseband processor, and is connected with the memory 125 through a bus interface, to use a program of the memory 125, and perform network device operations shown in the foregoing method embodiments.

The network side device may further include a network interface 126. The interface is, for example, a common public radio interface (common public radio interface, CPRI).

Specifically, the network side device 1200 in embodiments of this application further includes instructions or a program stored in the memory 125 and executable on the processor 124. The processor 124 use the instructions or the program stored in the memory 125 to perform the method performed by each module shown in FIG. 5, and a same technical effect is achieved. To avoid repetition, this is not described herein again.

Specifically, embodiments of this application further provide a network side device. As shown in FIG. 13, a network side device 1300 includes a processor 1301, a bus interface 1302, and a transceiver 1303. The network interface 1302 is, for example, a common public radio interface (common public radio interface, CPRI).

Specifically, the network side device 1300 in embodiments of this application further includes instructions or a program stored in the memory 1303 and executable on the processor 1301. The processor 1301 use the instructions or the program stored in the memory 1303 to perform the method performed by each module shown in FIG. 8, and a same technical effect is achieved. To avoid repetition, this is not described herein again.

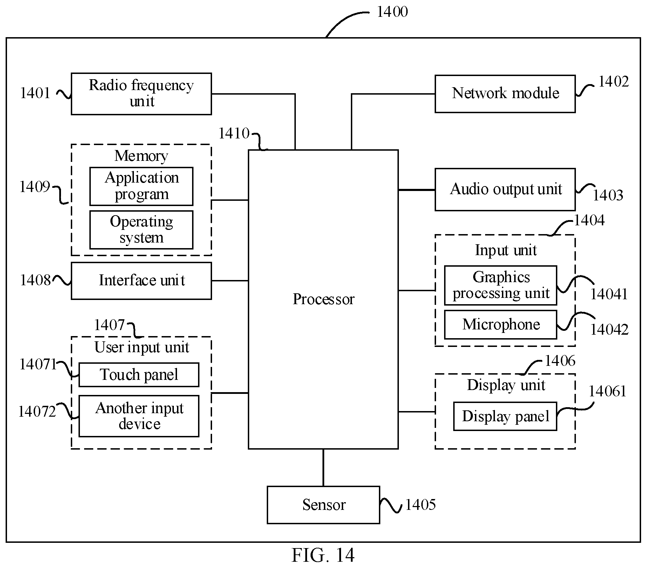

Embodiments of this application further provide a terminal, including a processor and a communication interface. The processor is used to determine, based on a first condition, to send or not to send a third message. The communication interface is configured to receive a second message that carries the first condition and that is sent by a network device, where the first condition indicates a condition that a target terminal used for performing the sensing measurement needs to meet. Terminal embodiments corresponds to the foregoing terminal side method embodiment. Each implementation process and implementation in the foregoing method embodiments are applied to terminal embodiments, and a same technical effect can be achieved. Specifically, FIG. 14 is a schematic hardware diagram a structure of a terminal for implementing an embodiment of this application.

A terminal 1400 includes, but is not limited to, at least some parts of components such as a radio frequency unit 1401, a network module 1402, an audio output unit 1403, an input unit 1404, a sensor 1405, a display unit 1406, a user input unit 1407, an interface unit 1408, a memory 1409, a processor 1410.

A person skilled in the art may understand that the terminal 1400 may further include the power supply (such as a battery) for supplying power to the components. The power supply may be logically connected to the processor 1410 by a power management system, to implement functions such as charging, discharging, and power consumption management by using the power management system. The terminal structure shown in FIG. 14 does not constitute a limitation on the terminal, and the terminal may include more or fewer components than shown, or combine some components, or have different component arrangements. This is not described herein again.

It should be understood that, the input unit 1404 may include a graphics processing unit (Graphics Processing Unit, GPU) 14041 and a microphone 14042. The graphics processing unit 14041 performs processing on image data of a static picture or a video that is obtained by an image acquisition device (for example, a camera) in a video acquisition mode or an image acquisition mode. The display unit 1406 may include a display panel 14061, and the display panel 14061 may be configured by using a liquid crystal display, an organic light-emitting diode, or the like. The user input unit 1407 includes at least one of a touch panel 14071 and another input device 14072. The touch panel 14071 may also be referred to as a touchscreen. The touch panel 14071 may include two parts: a touch detection apparatus and a touch controller. The another input device 14072 may include, but is not limited to, a physical keyboard, a functional key (such as a volume control key or a switch key), a track ball, a mouse, and a joystick. This is not repeated herein again.

In embodiments of this application, after receiving downlink data from a network side device, a radio frequency unit 1401 may transmit the downlink data to the processor 1410 for processing. In addition, the radio frequency unit 1401 may send uplink data to the network side device. Generally, the radio frequency unit 1401 includes, but is not limited to, an antenna, an amplifier, a transceiver, a coupler, a low noise amplifier, a duplexer, and the like.

The memory 1409 may be configured to store a software program or instructions and various data. The memory 1409 may mainly include a first storage area that stores a program or instructions and a second storage area that stores data. The first storage area may store an operating system, an application program or the instructions required by at least one function (for example, a sound playback function and an image display function), and the like. In addition, the memory 1409 may include a volatile memory or a non-volatile memory, or the memory 1409 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR_SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1409 in embodiments of this application includes, but is not limited to, the memories and any other memory of a suitable type.

The processor 1410 may include one or more processing units. Optionally, the processor 1410 may integrate an application processor and a modem processor. The application processor mainly processes an operation such as a related operating system, a user interface, and an application program. The modem processor mainly processes a wireless communication signal, for example, a baseband processor. It may be understood that, the modem processor may alternatively not be integrated in the processor 1410.

The radio frequency unit 1401 is configured to receive the second message that carries the first condition and that is sent by the network device. The first condition indicates the condition that the target terminal used for performing the sensing measurement needs to meet.

The processor 1410 is configured to: determine, based on the first condition, to send or not to send the third message to the network device. The third message includes the indication information indicating whether the terminal supports or expects to perform the sensing measurement.

Further, the processor 1410 is configured to:
send, to the network device in a case that the terminal meets the first condition the third message that includes indication information indicating that the sensing measurement is supported or expected to be performed.

Further, the processor 1410 is configured to:
determine, based on the second message in a case that the terminal meets the first condition, whether the terminal supports or expects to perform the sensing measurement; and
send, to the network device in a case that the terminal supports or expects to perform the sensing measurement, the third message that includes the indication information indicating that the sensing measurement is supported or expected to be performed.

Further, the first condition includes at least one of the following:
the terminal supports a specified sensing ability;
the terminal is in a specified connection status;
the terminal is in a specified moving state;
the terminal is a sensing measurement unit;
the terminal is in the sensing area; and
a signal of a serving cell of the terminal meets a specified condition.

Further, a form of the second message includes at least one of the following:
a system message; and
a paging message.

Further, the second message further includes information about a first proportion, where the information about the first proportion indicates a proportion of the terminals that meet the first condition and that send the third message or a proportion of terminals that meet the first condition and that do not send the third message. Correspondingly, the processor 1410 is configured to:
determine, based on the information about the first proportion in a case that the terminal meets the first condition, to send or not to send the third message to the network device.

Further, the second message further includes sensing task information of the sensing measurement. Correspondingly, the processor 1410 is configured to:
determine, based on the sensing task information in a case that the terminal meets the first condition, to send or not to send the third message to the network device, where
the sensing task information includes at least one of the following:
   a sensing type;
   sensing duration; and
   an estimated amount of reported data.

Further, the third message further includes at least one of the following:
a geographical location of the terminal;
a signal measurement result of a serving cell corresponding to the terminal;
a power level of the terminal; and
a sensing ability supported by the terminal.

Further, when the terminal is in a radio resource control inactive state or in a radio resource control idle state, and before the third message is sent to the network device, the method further includes:

The terminal initiates a radio resource control connection resume or establishment process.

Further, a reason for initiating the radio resource control connection resume or establishment process is to respond to the sensing measurement or to send the third message.

Further, the network device is a radio access network device and/or a core network device.

In embodiments of this application, a terminal determines, based on the first condition, to support or expect to perform a sensing measurement. Then, a target terminal is selected, to perform the sensing measurement, from terminals that support or expect to perform the sensing measurement. This improves execution efficiency of a sensing service, and ensures reliability of a sensing measurement result.

Embodiments of this application further provide a readable storage medium, where the readable storage medium stores a program or instructions. Each process of the method for implementing the sensing service is implemented when the program or the instructions is/are executed by a processor, and a same technical effect can be achieved. To avoid repetition, this is not described herein again.

The processor may be a processor of the terminal in the foregoing embodiments. The readable storage medium includes a computer-readable storage medium, for example, a computer read-only memory ROM, a random access memory RAM, magnetic disk, or optical disk

Embodiments of this application further provide a chip, where the chip includes a processor and a communication interface. The communication interface is coupled to the processor. The processor is used to run a program or instructions, to implement each process of the method for implementing the sensing service, and a same technical effect can be achieved. To avoid repetition, this is not described herein again.

It should be understood that, the chip mentioned in embodiments of this application further may be referred to as a system chip, a chip system, a system on chip, or the like.

Embodiments of this application provide a computer program/program product, where the computer program/program product is stored in a storage medium. The computer program/program product is executed by at least one processor to implement each process of the method for implementing the sensing service, and a same technical effect can be achieved. To avoid repetition, this is not described herein again.

Embodiments of this application further provide a system for implementing a sensing service, including a terminal and a network side device. The terminal is configured to perform steps of the method for implementing the sensing service. The network side device is configured to perform steps of the method for implementing the sensing service.

It should be noted that, in this specification, the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one ...... " does not exclude that there are still other same elements in the processes, methods, objects, or apparatuses. In addition, it should be noted that, a range of the method and the apparatus in embodiments of this application is not limited to perform a function in a sequence shown or discussed, and may further include performing the function based on a related function in a substantially same manner or in a reverse sequence. For example, the function may be performed in the sequence shown or discussed. The described method may be performed in a sequence different from the described method, and various steps may alternatively be added, omitted, or combined. In addition, features described with reference to examples may be combined in other examples.

Through the descriptions of the foregoing implementations, a person skilled in the art may clearly understand that the methods in the foregoing embodiments may be implemented by using software and a necessary general hardware platform, and certainly, may alternatively be implemented by hardware, but in many cases, the former manner is a better implementation. Based on such an understanding, the technical solutions of this application essentially or the part contributing to the current art may be implemented in a form of a computer software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in embodiments of this application.

Embodiments of this application are described above with reference to the accompanying drawings. However, this application is not limited to the foregoing specific implementations. The foregoing specific implementations are illustrative instead of imitative. Enlightened by this application, a person of ordinary skill in the art can make many forms without departing from the idea of this application and the scope of protection of the claims. All of the forms fall within the protection of this application.

## Claims

1. A method for implementing a sensing service, comprising:
determining, by a first network device, a first condition, wherein the first condition indicates a condition that a target terminal used for performing sensing measurement needs to meet;
sending, by the first network device to a terminal, a second message that carries the first condition; and
receiving, by the first network device, a third message from the terminal, and determining the target terminal based on the third message, wherein the terminal is a terminal that meets the first condition, and the third message comprises indication information indicating whether the terminal supports or expects to perform the sensing measurement.

2. The method according to claim 1, wherein the determining, by a first network device, a first condition comprises:
receiving, by the first network device, a first message sent by a sensing server, wherein the first message is used to request to perform the sensing measurement, and the first message is a non-terminal associated message; and
determining, by the first network device, the first condition based on the first message.

3. The method according to claim 2, wherein the first message comprises at least one of the following:
a method of the sensing measurement;
a measured value of the sensing measurement;
a sensing area of the sensing measurement;
a target quantity of terminals needed for the sensing measurement;
reporting times of the sensing measurement;
a report type of the sensing measurement; and
all or a part of the first condition.

4. The method according to any one of claims 1 to 3, wherein the first condition comprises at least one of the following:
the terminal supports a specified sensing ability;
the terminal is in a specified connection status;
the terminal is in a specified moving state;
the terminal is a sensing measurement unit;
the terminal is in a sensing area; and
a signal of a serving cell of the terminal meets a specified condition.

5. The method according to claim 4, wherein the second message further comprises information about a first proportion, wherein the information about the first proportion indicates a proportion of terminals that meet the first condition and that send the third message or a proportion of terminals that meet the first condition and that do not send the third message.

6. The method according to claim 1, wherein the sending, by the first network device to a terminal, a second message that carries the first condition comprises:
sending, by the first network device in a case that it is determined that in terminals in a radio resource control RRC connected state, a quantity of terminals that meet the first condition is less than a target quantity, the second message that comprises the first condition to a terminal in an RRC inactive state and/or a terminal in an RRC idle state.

7. The method according to claim 1, wherein a form of the second message comprises at least one of the following:
a system message; and
a paging message.

8. The method according to claim 1, wherein the second message further comprises sensing task information of the sensing measurement, wherein the sensing task information comprises at least one of the following:
a sensing type;
sensing duration; and
an estimated amount of reported data.

9. The method according to claim 1, wherein the third message further comprises at least one of the following:
a geographical location of the terminal;
a signal measurement result of a serving cell corresponding to the terminal;
a power level of the terminal; and
a sensing ability supported by the terminal.

10. The method according to any one of claims 1 to 3, wherein the first network device is a radio access network device.

11. An apparatus for implementing a sensing service, comprising:
a condition determining module, configured to determine a first condition, wherein the first condition indicates a condition that a target terminal used for performing sensing measurement needs to meet;
a condition sending module, configured to: send, to a terminal, a second message that carries the first condition; and
a sensing execution module, configured to: receive a third message from the terminal, and determine the target terminal based on the third message, wherein the terminal is a terminal that meets the first condition, and the third message comprises indication information indicating whether the terminal supports or expects to perform the sensing measurement.

12. A method for implementing a sensing service, comprising:
determining, by a second network device, a first condition based on an obtained first message, wherein the first message is used to request to perform sensing measurement, the first message is a non-terminal associated message, and the first condition indicates a condition that a target terminal used for performing the sensing measurement needs to meet;
sending, by the second network device to the terminal via a first network device corresponding to the sensing measurement, a second message that carries the first condition; and
receiving, by the second network device, a third message from the terminal via the first network device, and determining the target terminal based on the third message, wherein the terminal is a terminal that meets the first condition, and the third message comprises indication information indicating whether the terminal supports or expects to perform the sensing measurement.

13. The method according to claim 12, wherein the first message comprises at least one of the following:
a method of the sensing measurement;
a measured value of the sensing measurement;
a sensing area of the sensing measurement;
a target quantity of terminals needed for the sensing measurement;
reporting times of the sensing measurement;
a report type of the sensing measurement; and
all or a part of the first condition.

14. The method according to claim 12, wherein the first condition comprises at least one of the following:
the terminal supports a specified sensing ability;
the terminal is in a specified connection status;
the terminal is in a specified moving state;
the terminal is a sensing measurement unit;
the terminal is in a sensing area; and
a signal of a serving cell of the terminal meets a specified condition.

15. The method according to claim 12, wherein the sending, by the second network device to the terminal via a first network device corresponding to the sensing measurement, a second message that carries the first condition comprises:
determining, by the second network device based on the first message, the first network device corresponding to the sensing measurement; and
sending, to the first network device, the second message that carries the first condition.

16. The method according to claim 15, wherein the second message further comprises a cell list corresponding to the sensing measurement.

17. The method according to claim 12, wherein the second message further comprises information about a first proportion, wherein the information about the first proportion indicates a proportion of terminals that meet the first condition and that send the third message or a proportion of terminals that meet the first condition and that do not send the third message.

18. The method according to claim 12, wherein the second message further comprises sensing task information of the sensing measurement, wherein the sensing task information comprises at least one of the following:
a sensing type;
sensing duration; and
an estimated amount of reported data.

19. The method according to claim 12, wherein the third message further comprises at least one of the following:
a geographical location of the terminal;
a signal measurement result of a serving cell corresponding to the terminal;
a power level of the terminal; and
a sensing ability supported by the terminal.

20. The method according to any one of claims 12 to 18, wherein the second network device is a core network device.

21. An apparatus for implementing a sensing service, comprising:
a condition determining module, configured to determine a first condition based on an obtained first message, wherein the first message is used to request to perform sensing measurement, the first message is a non-terminal associated message, and the first condition indicates a condition that a target terminal used for performing sensing measurement needs to meet;
a condition sending module, configured to: send, to a terminal via a first network device corresponding to the sensing measurement, a second message that carries the first condition; and
a sensing execution module, configured to: receive a third message from the terminal via the first network device, and determine the target terminal based on the third message, wherein the terminal is a terminal that meets the first condition, and the third message comprises indication information indicating whether the terminal supports or expects to perform the sensing measurement.

22. A method for implementing a sensing service, comprising:
receiving, by a terminal, a second message that carries a first condition and that is sent by a network device, wherein the first condition indicates a condition that a target terminal used for performing sensing measurement needs to meet; and
determining, by the terminal based on the first condition, to send or not to send a third message to the network device, wherein the third message comprises indication information indicating whether the terminal supports or expects to perform the sensing measurement.

23. The method according to claim 22, wherein the determining, by the terminal based on the first condition, to send or not to send a third message to the network device comprises:
sending, to the network device in a case that the terminal meets the first condition, the third message that comprises indication information indicating that the sensing measurement is supported or expected to be performed.

24. The method according to claim 22, wherein the determining, by the terminal based on the first condition, to send or not to send a third message to the network device comprises:
determining, based on the second message in a case that the terminal meets the first condition, whether the terminal supports or expects to perform the sensing measurement; and
sending, to the network device in a case that the terminal supports or expects to perform the sensing measurement, the third message that comprises indication information indicating that the sensing measurement is supported or expected to be performed.

25. The method according to claim 22, wherein the first condition comprises at least one of the following:
the terminal supports a specified sensing ability;
the terminal is in a specified connection status;
the terminal is in a specified moving state;
the terminal is a sensing measurement unit;
the terminal is in a sensing area; and
a signal of a serving cell of the terminal meets a specified condition.

26. The method according to claim 22, wherein a form of the second message comprises at least one of the following:
a system message; and
a paging message.

27. The method according to claim 22, wherein the second message further comprises information about a first proportion, wherein the information about the first proportion indicates a proportion of terminals that meet the first condition and that send the third message or a proportion of terminals that meet the first condition and that do not send the third message; and correspondingly, the determining, by the terminal based on the first condition, to send or not to send a third message to the network device comprises:
determining, based on the information about the first proportion in a case that the terminal meets the first condition, to send or not to send the third message to the network device.

28. The method according to claim 22, wherein the second message further comprises sensing task information of the sensing measurement; and correspondingly, the determining, by the terminal based on the first condition, to send or not to send a third message to the network device comprises:
determining, based on the sensing task information in a case that the terminal meets the first condition, to send or not to send the third message to the network device, wherein
the sensing task information comprises at least one of the following:
a sensing type;
sensing duration; and
an estimated amount of reported data.

29. The method according to claim 22, wherein the third message further comprises at least one of the following:
a geographical location of the terminal;
a signal measurement result of a serving cell corresponding to the terminal;
a power level of the terminal; and
a sensing ability supported by the terminal.

30. The method according to claim 22, wherein in a case that the terminal is in a radio resource control inactive state or a radio resource control idle state, before sending the third message to the network device, the method further comprises:
initiating, by the terminal, a radio resource control connection resume or establishment process.

31. The method according to claim 30, wherein a reason for initiating the radio resource control connection resume or establishment process is to respond to the sensing measurement or to send the third message.

32. The method according to any one of claims 22 to 29, wherein the network device is a radio access network device and/or a core network device.

33. An apparatus for implementing a sensing service, comprising:
a condition receiving module, configured to receive a second message that carries a first condition and that is sent by a network device, wherein the first condition indicates a condition that a target terminal used for performing sensing measurement needs to meet; and
a sensing execution module, configured to: determine, based on the first condition, to send or not to send a third message to the network device, wherein the third message comprises indication information indicating whether the terminal supports or expects to perform the sensing measurement.

34. A network side device, comprising a processor and a memory, wherein the memory stores a program or instructions executable on the processor, and when the program or the instructions are executed by the processor, steps of the method for implementing a sensing service according to any one of claims 1 to 10 are implemented, or steps of the method for implementing a sensing service according to any one of claims 12 to 20 are implemented.

35. A terminal, comprising a processor and a memory, wherein the memory stores a program or instructions executable on the processor, and when the program or the instructions are executed by the processor, steps of the method for implementing a sensing service according to any one of claims 22 to 32 are implemented.

36. A readable storage medium, wherein the readable storage medium stores a program or instructions, and when the program or the instructions are executed by the processor, steps of the method for implementing a sensing service according to any one of claims 1 to 10 are implemented, or steps of the method for implementing a sensing service according to any one of claims 12 to 20 are implemented, or steps of the method for implementing a sensing service according to any one of claims 22 to 32 are implemented.
